Europäisches Patentamt

European Patent Office

Office européen des brevets

(19)

(11) EP 1 393 461 B1

(12) **EUROPEAN PATENT SPECIFICATION**

(45) Date of publication and mention
of the grant of the patent:
**19.07.2006 Bulletin 2006/29**

(51) Int Cl.:
*H04B 3/23* (2006.01)    *H04M 9/08* (2006.01)

(21) Application number: **01932491.2**

(22) Date of filing: **17.05.2001**

(86) International application number:
**PCT/SG2001/000093**

(87) International publication number:
**WO 2002/093774 (21.11.2002 Gazette 2002/47)**

(54) **ECHO CANCELLER AND A METHOD OF CANCELLING ECHO**

VERFAHREN UND VORRICHTUNG FÜR ECHOUNTERDRÜCHUNG

SUPPRESSEUR D'ECHO ET PROCEDE DE SUPPRESSION D'ECHO

(84) Designated Contracting States:
**DE FR GB IT**

(43) Date of publication of application:
**03.03.2004 Bulletin 2004/10**

(73) Proprietor: **STMicroelectronics Asia Pacific Pte Ltd.**
**Singapore 554575 (SG)**

(72) Inventors:
• **TIAN, Wen Shun**
**Singapore 680285 (SG)**
• **ALVAREZ-TINOCO, Antonio, Mario**
**Singapore 596710 (SG)**

(74) Representative: **Jorio, Paolo et al**
**STUDIO TORTA S.r.l.**
**Via Viotti, 9**
**10121 Torino (IT)**

(56) References cited:
**EP-A- 0 732 838**        **WO-A-00/72566**

• **FRENZEL R ET AL: "Using prewhitening and stepsize control to improve the performance of the LMS algorithm for acoustic echo compensation" PROCEEDINGS OF THE INTERNATIONAL SYMPOSIUM ON CIRCUITS AND SYSTEMS. SAN DIEGO, MAY 10 - 13, 1992, PROCEEDINGS OF THE INTERNATIONAL SYMPOSIUM ON CIRCUITS AND SYSTEMS. (ISCAS), NEW YORK, IEEE, US, vol. 4 CONF. 25, 3 May 1992 (1992-05-03), pages 1930-1932, XP010061454 ISBN: 0-7803-0593-0 cited in the application**

**Description**

This invention relates to an echo canceller and a method of cancelling echo.

An adaptive filter may be used to cancel echo such as in communications systems. In an adaptive filter, characteristics of the filter are adaptively modified so that an output signal, generated from an applied input signal by action of the filter to filter the input signal, is conformed so as to tend to bear a particular relationship to the input signal, in accordance with a control input. In communications systems, for example, an echo signal may arise at interface circuitry which receives incoming signal on an incoming path of a four wire link due to part of the incoming signal being redirected, through the circuitry, to an outgoing part of the four wire link, rather than, as is intended, the whole of that signal being directed to a two wire link to which the interface circuitry is connected. The part signal is thus present in the outgoing signal from the interface circuitry, being directed back to the far end of the four wire link, to appear as a delayed "echo" signal. In this application, the input of the filter may be connected to receive the incoming signal and the output is connected to a subtractor which is also connected to receive the outgoing signal from the interface circuitry. The subtractor generates an outgoing signal, for transmission on the outgoing signal path, which is the result of subtraction of the output of the filter from the signal from the interface circuitry. The resultant outgoing signal is used to adjust the filter characteristics to minimise the echo signal. Adaptive filters may be used in analogous applications such as in cancelling acoustic echo occurring in full duplex communications systems.

Generally, in an adaptive filter, filter coefficients are repetitively updated to effect updating of the filter characteristics so that effective echo cancellation occurs even though the circuit characteristics of the communications link change.

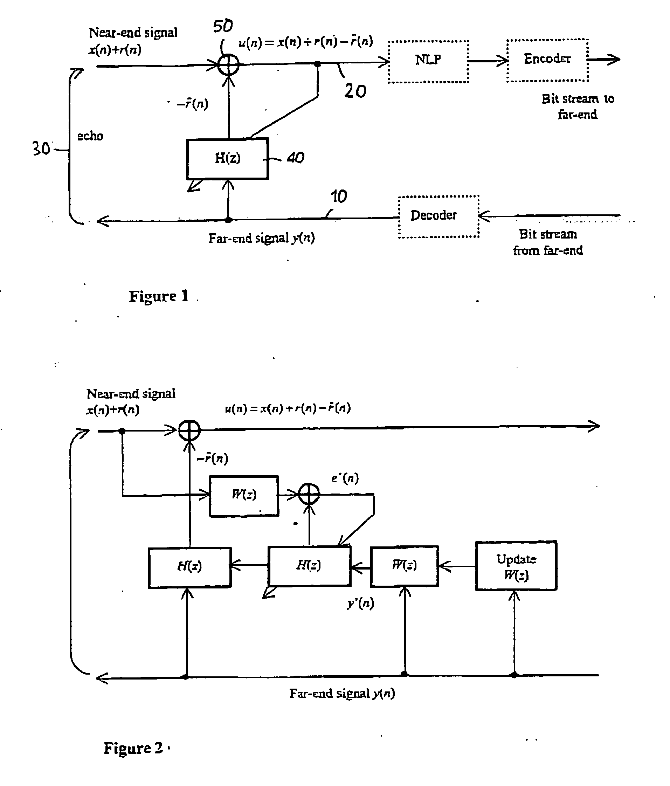

Customarily in acoustic or line echo cancellation, either an LMS (Least Mean Square) or NLMS (Normalised LMS) method is used: An LMS echo canceller typically has one adaptive filter whose coefficients are updated sample-by-sample. Figure 1 shows such a conventional echo cancellation structure in block diagram form. As shown in the figure, a first communications channel 10 carries a far-end signal y(n) to a near-end interface 30, and a second communications channel 20 carries a near-end signal x(n) back to the far-end of the communications system. In view of imperfect coupling at the near-end interface 30, the second communications channel 20 also carries an echo signal r(n), which is undesirable. Accordingly, an adaptive filter 40 and signal adder 50 are included to effect at least partial cancellation of the echo signal r(n). The signal adder 50 is coupled into the second communications channel 20, and adds the signal from the near-end interface 30 with a signal from the adaptive filter 40 which is an estimate of the echo signal which is desired to be cancelled. The output from the signal adder 50 on the second communications channel 20 is represented by u(n). The blocks indicated with dotted lines represent functional components included for forming a line echo canceller (LEC). For acoustic echo cancellers (AEC), these components may not be present.

With reference to Figure 1, the transversal filter coefficient updating and filtering are described by the following equations.

Adaptive filter coefficients updating:

$$h_k(n+1) = h_k(n) + 2\mu.e(n).y(n-k)/P_y(n) \tag{1}$$

where $h_k(n)$ are the filter coefficients in time index n and filter tap $k$, $y(n)$ is far-end signal, e(n) is the $u(n)$ when there is no near-end talking, $\mu$ is the step size, $P_y(n)$ is the power of far-end signal which is given by

$$P_y(n) = (1-\alpha)P_y(n-1) + \alpha.y(n)^2 \tag{2}$$

where $\alpha$ is the power normalised parameter, chosen according to the size of NLMS.

The estimated echo signal is given by

$$\hat{r}(n) = y(n) * h_k(n) = \sum_{k=0}^{N-1} h_k(n)y(n-k) \tag{3}$$

where $y(n)$ is far-end signal and $N$ is the length of the filter.

Finally the echo cancelled signal $u(n)$ is given by

$$u(n) = x(n) + r(n) - \hat{r}(n) \tag{4}$$

where $x(n)$ is the near-end speech and $r(n)$ is the echo from the echo path plus the additive noise. If there is no near-end-talk, $u(n)$ becomes $e(n)$ given by

$$e(n) = r(n) - \hat{r}(n) \tag{5}$$

This error signal is used to update the transversal filter coefficients for the next sample.

This NLMS algorithm is same for both LEC and AEC. A control module for double talking detection and freeze control may be employed, but are not described here, since this may be of conventional form.

These conventional filter algorithms can be found, for example, in Simon Haykin, "Adaptive Filter Theory", Third Edition, Prentice Hall, 1996., and Texas Instruments, "Acoustic Echo Cancellation-Algorithm and Implementation on the TMS320C8X", Application Report, 1996.

A system employing pre-whitening of the far-end signal is shown in block diagram form in Figure 2. In this system, a Levinson-Durbin algorithm is used to calculate whitening filter coefficients. The decorrelated far-end and residual signals are used to update the transversal filter coefficients using NLMS method. Adaptive filter coefficients are updated as following.

$$h_k(n+1) = h_k(n) + 2\mu.e'(n).y'(n-k)/P_y(n) \tag{6}$$

where the modified far-end, echo signals, error signals are calculated by

$$y'(n) = y(n) * w(n) = \sum_{k=0}^{N_w-1} w(k)y(n-k) \tag{7}$$

$$r'(n) = r(n) * w(n) = \sum_{k=0}^{N_w-1} w(k)r(n-k) \tag{8}$$

$$e'(n) = r'(n) - \hat{r}'(n) \tag{9}$$

where $w(n)$ is the FIR filter coefficients which is estimated in intervals of about 16 ms using the Levinson-Durbin algorithm.

The power is estimated using the modified far-end signal which is given by

$$P_y(n) = (1-\alpha)P_y(n-1) + \alpha.y'(n)^2 \tag{10}$$

The modified estimated echo signal is given by

$$\hat{r}'(n) = y'(n) * h_k(n) = \sum_{k=0}^{N-1} h_k(n)y'(n-k) \tag{11}$$

For transversal filtering, the estimation of echo is given by:

$$\hat{r}(n) = y(n) * h_k(n) = \sum_{k=0}^{N-1} h_k(n)y(n-k) \tag{12}$$

as in equation (3).

The echo cancelled signal is given by

$$u(n) = x(n) + r(n) - \hat{r}(n) \tag{13}$$

In Figure 2, the two filters H(z) have same set of coefficients. The right-hand one is used to update its coefficients using a whitened error $e'(n)$ signal and a far-end $y'(n)$ signal. The updated coefficients are passed to the left-hand side as shown in Figure 2, and the left-hand adaptive filter takes $y(n)$ as its input to estimate the echo. Finally, $u(n)$ is sent to the far-end.

This technique is described, for example, in Rudi Frenzel and Marcus E. Henecks, "Using Pre-Whitening and Step Size Control to Improve the Performance of the LMS Algorithm for Acoustic Echo Compensation", IEEE International Symposium on Circuits and Systems, Vol 4, pp 1930-1932, New York, 1992.

In speech coding, a perceptual weighting technique may be used. In this system, a time-varying short-term prediction filter $A(z)$ is used to produce synthesised speech. Updating of this filter's coefficients is done on a frame-by-frame basis. A frame of speech samples (120 to 240 samples) is buffered and, using conventional Levinson-Durbin recursion, a set of short-term LPC coefficients is computed. The buffered speech samples may be either the original speech (for AEC applications) or reconstructed speech (for LEC applications). The speech or audio signal's synthesis filter is given by

$$\frac{1}{1-A(z)} = \frac{1}{1-\sum_{i=1}^{p} a(i)z^{-i}} \tag{14}$$

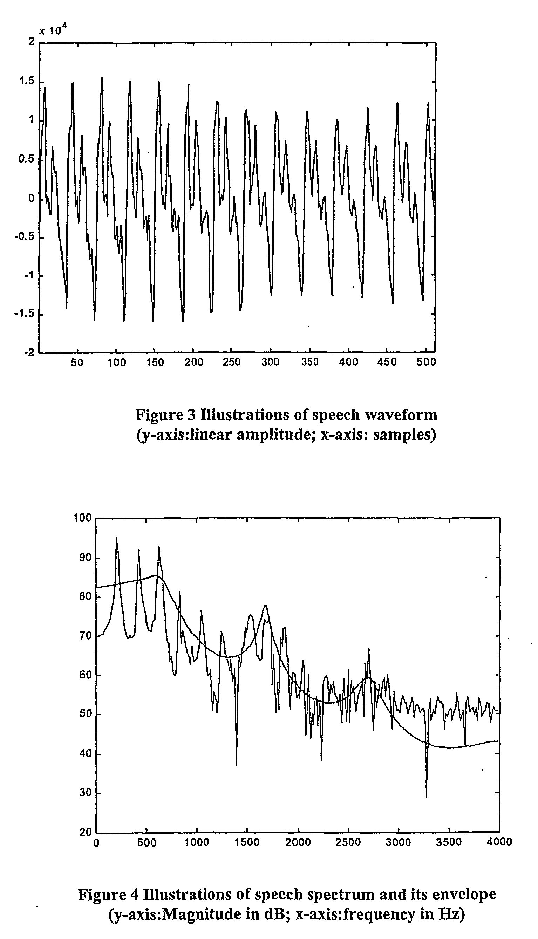

where $a(i)$ is the short-term LPC coefficients and p is the LPC filter order. An example is illustrated in Figure 3 and Figure 4. Figure 3 shows a speech waveform and Figure 4 shows the speech spectrum and its envelope. The diagram in Figure 3 is graduated according to linear amplitude in the vertical axis and number or samples in the horizontal axis. The diagram in Figure 4 has a vertical axis graduated according to magnitude in decibels (dB) and a horizontal axis corresponding to frequency in Hertz.

A reduction in amplitude of peaks is possible if the speech spectrum is shaped by a conventional perceptual weighting formant (high energy) filter. This is not for perceptual weighting applications, but to produce whitening effect. The synthesis filter in Equation (14) is used to construct the perceptual weighting filter. The formant weighting filter has a transfer function:

$$W(z) = \frac{1-A(z/\gamma_1)}{1-A(z/\gamma_2)} = \frac{1-\sum_{i=1}^{p} a(i)z^{-i}\gamma_1^i}{1-\sum_{i=1}^{p} a(i)z^{-i}\gamma_2^i} \tag{15}$$

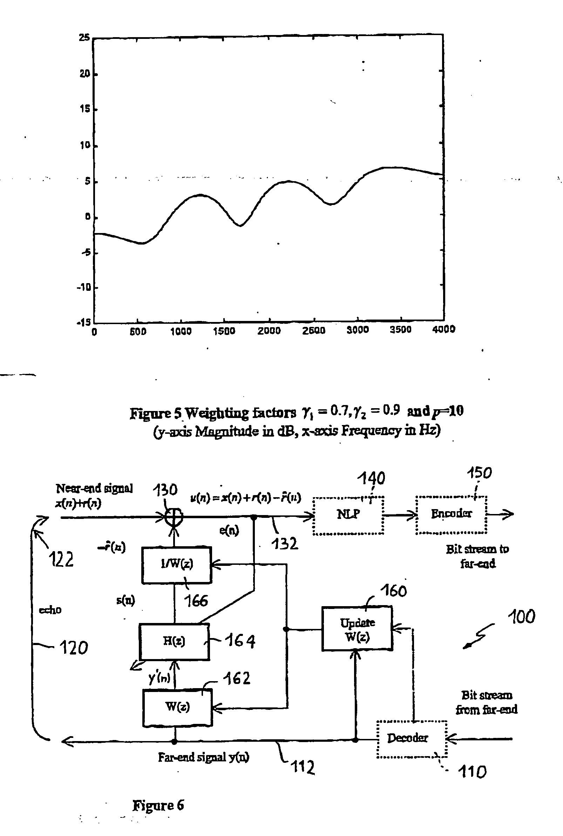

where $\gamma_1$ and $\gamma_2$ are bandwidth expansion factors between 0 and 1. Typical values are $\gamma_1 = 0.7$, $\gamma_2 = 0.9$. One example of the whitening filter frequency response is shown in Figure 5. To simplify this auto-recursive moving average (ARMA) filter with FIR filter, its impulse response is calculated and truncated with $N_w$ samples. The inputs response is denoted by $h_w(n)$, n=o, ..., $N_w$ - 1}, where $N_w$ is the length of the weighting filter. A typical value might be $2p$.

A perceptual weighting technique is described in A.M. Kondoz, "Digital Speech-Coding for Low Bit Rate Communications Systems", John Wiley & Sons, 1995.

For conventional echo cancellation, as described with reference to Figure 1, it is difficult to track the echo-path and converge if the echo tail length is long and the input signal is highly correlated. The described pre-whitening technique may improve the convergence speed, but the ELRE in the steady state may be affected. This is because the target error signal in Equation (9), which is used to calculate the gradient, is not the final error signal as in Equation (5), which is sent to near-end as echo cancelled signal. Minimising $|e'(n)|^2$ is hot equivalent to minimising $|e(n)|^2$, while $e(n)$ or $u(n)$ is the signal sent to the far-end user.

A method for echo cancellation in a communication system having the features of the preamble of claim 9 is disclosed in Frenzel R et al: "Using prewhitening and stepsize control to improve the performance of the LMS algorithm for acoustic echo compensation" Proceedings of the International Symposium on Circuits an Systems, San Diego, May 10-13, 1992, IEEE, US, vol 4, conf 25, 3 May 1992, pages 1930-1932, XP10061454 ISBN: 0-7803-0593-0.

Other echo cancellation methods and systems are disclosed in e.g. EP-A-0 732 838 and WO 00/75 566.

According to the invention, a communications apparatus and a method for echo cancellation in a communications system are provided according to claims 1 and, respectively, 9.

This proposed method is especially suitable for LPC vocoders in LEC applications, such as those known as G.723.1 and G.729. This is because the LPC coefficients are available at the decoder and do not need not to be calculated.

In one aspect, an echo canceller is proposed for use in a communications apparatus having an incoming far-end signal and a near-end signal which may include an echo component derived from the far-end signal, the echo canceller including an echo estimator for generating an estimated echo signal, and a signal subtracting means for subtracting the estimated echo signal from said rear-end signal to generate a compensated near-end signal including an echo error signal component, wherein said echo estimator includes a weighting filter arranged to produce a whitened far-end signal by weighted filtering of the incoming far-end signal, and a weighting filter coefficient processor which determines coefficients for the weighting filter according to linear predictive coding coefficients derived dynamically from the incoming far-end signal, the echo estimator further including an adaptive transversal filter having adaptive coefficients determined according to said whitened far-end signal and said error signal component, said adaptive transversal filter being operative to generate said estimated echo signal by filtering said far-end signal using said adaptive coefficients.

In another aspect, there is provided a communications apparatus including:

an encode/decode processor which generates outgoing signals from compensated near-end signal data for transmission by way of a communications channel and generates far-end signal data from incoming signals received by way of said communications channel; and
an echo cancellation processor coupled to the encode/decode processor for generating estimated echo signal data and subtracting the estimated echo signal data from near-end signal data so as to obtain said compensated near-end signal data, the echo cancellation processor including:

a weighting filter arranged to produce whitened far-end signal data by weighted filtering of said far-end signal data using weighting filter coefficients;
a weighting filter coefficient processor which determines said weighting filter coefficients according to linear predictive coding coefficients derived from the far-end signal data;
an adaptive transversal filter having adaptive coefficients determined according to said whitened far-end signal data and an echo error component obtained from said compensated near-end signal data, said adaptive transversal filter being operative to generate said estimated echo signal data by filtering said far-end signal data using said adaptive coefficients.

In another aspect, there is provided an echo compensation, processor for use in a communications system in which outgoing signal data for transmission by way of a communications channel comprises near-end signal data $x(n)$ and an echo component $r(n)$ derived from far-end signal data $y(n)$ received by way of said communications channel the echo compensation processor being coupled to receive said far-end signal data $y(n)$ and generate an estimated echo component $r'(n)$ which is subtracted from the outgoing sigtsal data so as to obtain compensated near-end signal data $u(n)$, the echo cancellation processor including:

a weighting filter $W(z)$ arranged to produce whitened far-end signal data $y'(n)$ by weighted filtering of said far-end signal data using weighting filter coefficients $w(n)$;
a weighting filter coefficient processor which determines said weighting filter coefficients according to linear predictive coding coefficients derived from the far-end signal data; and
an adaptive transversal filter $H(z)$ having adaptive coefficients $h(n)$ determined according to said whitened far-end signal data and an echo error component $e(n)$ obtained from said compensated near-end signal data, said adaptive transversal filter being operative to generate said estimated echo component by filtering said far-end signal data using said adaptive coefficients;
wherein:

said whitened far-end signal data $y'(n)$ is generated according to $y'(n) = y(n)*w(n)$;

said estimated echo signal is generated according to r'(n) = y(n)*h(n); and
said adaptive coefficients h(n) are determined according to

$$h_k(n+1) = h_k(n) + K.e(n).y'(n-k)/P_y(n)$$

$$P_y(n) = (1-a).P_y(n-1) + a.y'(n)^2$$

where n, k are integers, and K, a are constants.

There is also provided a method for echo cancellation in a communications system having incoming communications signals and outgoing communications signals wherein the outgoing communications signals include an echo signal derived from the incoming communications signals, and wherein the incoming communications signals comprise a series of digital data samples, the method including:

  generating weighting filter coefficients based on linear predictive coding coefficients calculated from a block comprising a phaality of sequential samples of the incoming communications signals;
  filtering the incoming communications signals through a weighting filter utilising said weighting filter coefficients to produce a weighted incoming communications signals;
  generating estimated echo signals by filtering the incoming communications signals through an adaptive transversal filter, the adaptive transversal filter using adaptive filter coefficients; and
  subtracting said estimated echo signals from said outgoing communications signals to produce error signals;
  wherein said adaptive filter coefficients are determined for each sample in said block on the basis of said weighted incoming communications signals and said error signals.

The present description further refers to an echo canceller for use in a communications system having incoming communications signals and outgoing communications signals wherein the outgoing communications signals include an echo signal derived from the incoming communications signals, and wherein the incoming communication signals comprise a series of digital data samples, the echo canceller including:

  a weighting filter coefficient generator for generating weighting filter coefficients based on linear predictive coding coefficients calculated from a block comprising a plurality of sequential samples of the incoming communications signals;
  a weighting filter for filtering the incoming communications signals using said weighting filter coefficients to produce weighted incoming communications signals;
  an adaptive transversal filter for generating estimated echo signals by filtering the incoming communications signals using adaptive filter coefficients; and
  a signal combiner for subtracting said estimated echo signals from said outgoing communications signals to produce error signals;
  wherein said adaptive filter coefficients are determined for each sample in said block on the basis of said weighted incoming communications signals and said error signals.

The invention is further described by way of example only with reference to the accompanying drawings in which:

  Figure 1 is a block diagram of an LMS echo canceller,
  Figure 2 is a block diagram of an LMS echo canceller with pre-whitening;
  Figure 3 is representations of speech waveform;
  Figure 4 is representations of speech spectrum and its envelope;
  Figure 5 illustrates exemplary weighting factors ($_2$ = 0.7($_2$ = 0.9 and $p$ = 10;
  Figure 6 is a block diagram of an echo canceller constructed in accordance with the invention for short-tail lenghts;
  Figure 7 is a block diagram of an equivalent structure of the echo canceller of Figure 6;
  Figure 8 is a block diagram of an equivalent structure of the echo canceller of Figure 6 with multi-weighting filters for long tail-length applications;
  Figure 9 diagrammatically illustrates procedures for using G.723.1 LPC coefficient to calculate a whitened far-end speech;
  Figure 10 diagrammatically illustrates procedures for calculating LPC coefficient and to whiten the far-end speech;

Figure 11 is an exemplary spectrum comparison, after 128 ms; and
Figure 12 is an exemplary comparison, after 3072 ms.

Based on the energy of the spectrum envelope of a speech signal, weighting (whitening) filtering is applied to the input signal for coefficient adaptation. Since the speech signal is pseudo-stationary, multiple weighting adaptive filters may be used to whiten each speech segment in order to achieve better whitening effects if the tail length is long. The adaptive weighting filter coefficients may be calculated from linear prediction coding (LPC) coefficients. For LEC applications, if the decoder is a LPC-type vocoder, the LPC coefficients are at hand and it is not necessary to calculate whitening filter coefficients. On the other hand for non LPC-type codec applications, these LPC coefficients can be calculated using the Levinson-Durbin method. Dynamic weighting filters may be are composed using the LPC coefficients.

After weighting the input signal, the decorrelated far-end signal as well as a non-whitened error signal may be used to update the transversal filter coefficients. Once the adaptive transversal filter coefficients are obtained, the echo signal may be estimated by passing the original far-end signal to the transversal filter, such as is described by Equations 3, 12 and 18.

Broadly, the following steps are performed:

Determination of Weighting Filter Coefficients

1. Buffer $N_{sub}$ samples (e.g. 60) of far-end signal to make up one frame $N_{frm}$ samples (e.g. 180) which consists of current block and two previous blocks. If an LPC vocoder is used in LEC, the block size for calculating whitening filter coefficients is chosen according to vocoder's subframe size, i.e. 60 samples for G.723.1 and 40 samples for G.729.

2. The Levinson-Durbin method is applied to calculate LPC coefficients. For LEC and LPC decoder applications, the LPC coefficients are not calculated from the decoded speech but directly decoded from the bit-stream (Equation 14).

3. Calculate and update weighting filter coefficients (Equation 15).

The abovementioned procedural steps 1-3 are then repeated block by block for the incoming signal.

Updating of Transversal Filter Coefficients and Filtering

4. Filter the far-end signal by this weighting filter. The output of this weighting filter is used to update transversal filter coefficients (Equation 17).

5. Update filter coefficients using weighted far-end signal and non-weighted error signal (Equations 16 and 21).

6. Estimate the echo by filtering the original far-end signal (Equation 18).

7. Subtract the estimated echo and send to far-end (Equation 21).

The procedural steps 4-7 are repeated on a sample by sample basis.

**Embodiment**

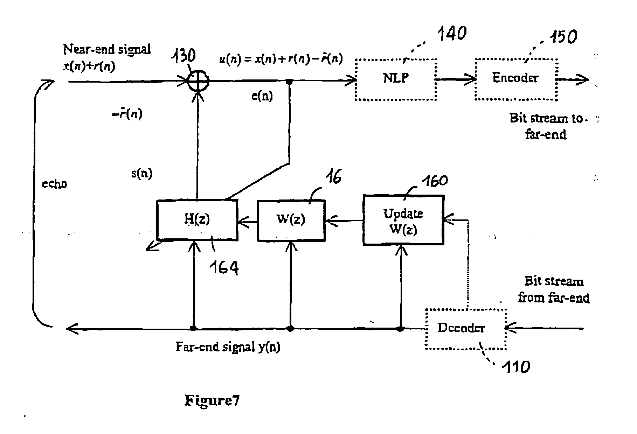

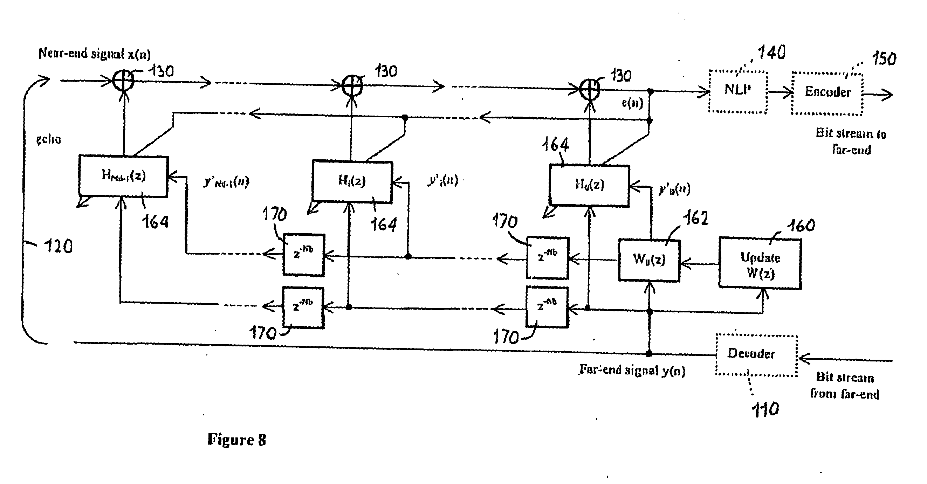

Suitable echo cancellation structures are shown in Figures 6 and 8, respectively, for short-tail and long-tail echo path applications. The equivalent structure of Figure 6 is shown in Figure 7. In Figure 8, multiple weighting filters are used for far-end speech. Since speech signal is not stationary, it is preferred to weight the far-end speech signals segmentally.

Referring to Figure 6, an echo cancellation circuit 100 is illustrated in block diagram form. The echo cancellation circuit 100 is provided to reduce or eliminate echo signals which arise at a near-end interface 120. A decoder 110 is provided to receive a far-end bit stream, and decode the bit stream to produce a far-end signal y(n) on a first communications channel 112 which is coupled to the near-end interface 120. The decoder 110 may comprise a component of a linear predictive coding (LPC) vocoder or the like. The first communications channel 112 provides an input to the near-end interface 120, and an output 122 is also provided for passing a near-end signal x(n) from the near-end interface 120 to the far-end communications system. As discussed hereinabove, impedance mismatches and the like which may occur at the near-end interface 120 can cause a portion of the incoming far-end signal y(n) to appear as an echo signal r(n) together with the near-end signal x(n) on the output 122, Accordingly, an estimate of the reflected signal is generated and subtracted from the near-end output using a signal adder 130 to produce a compensated output signal u(n) on a second outgoing communications channel 132. The compensated output signal is passed to encoding circuitry 140, 150 for transmission to the far-end communications system.

A weighting filter 162 is coupled to receive the far-end signal y(n) from the first communications channel 112. The output of the weighting filter 162 is coupled to provide input to an adaptive transversal filter 164. The output of adaptive transversal filter 164 is coupled to the input of an inverse weighting filter 166, which generates the estimated reflection signal -r(n) that is provided to the signal adder 130. A weighting filter coefficient update processor 160 is coupled to receive output from the decoder 110 for generating updated weighting filter coefficients, which are then passed to the weighting filter 162 and inverse weighting filter 166.

Figure 8 is a block diagram of another embodiment of echo cancellation circuitry according to the present invention, which is adapted for long tail echo path applications. In particular, for long tail echo path applications, it is preferred to apply echo cancellation over several consecutive segments. Accordingly, a plurality of adaptive transversal filters 164 and signal adders 130 are provided sequentially in the transmission path from the near-end interface 120 to the encoder 150. The far end signal y(n) and the output of the weighting filter 162 are provided to the respective adaptive filters 164 through buffer delay components 170.

Symbols

The symbols used in the following are summarised as follows:

$n$-time index in sample
$N$-tail length in sample
$N_b$-block or subframe length
$N_{frm}$-frame length
$N_b$-Number of blocks in N-tail length, $N/N_{frm}$
$N_w$-weighting filter tap length

Adaptive Weighting Filter

A filter of the kind used for perceptual filtering is used.

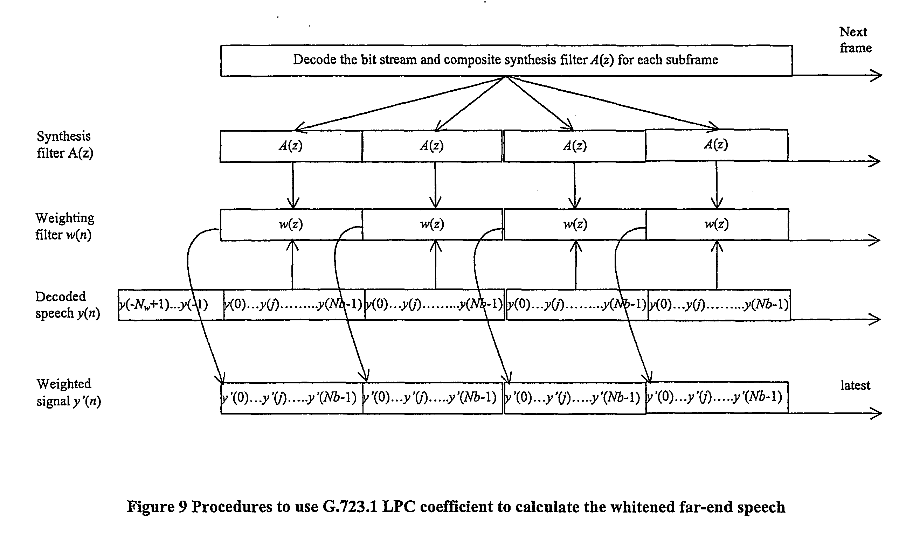

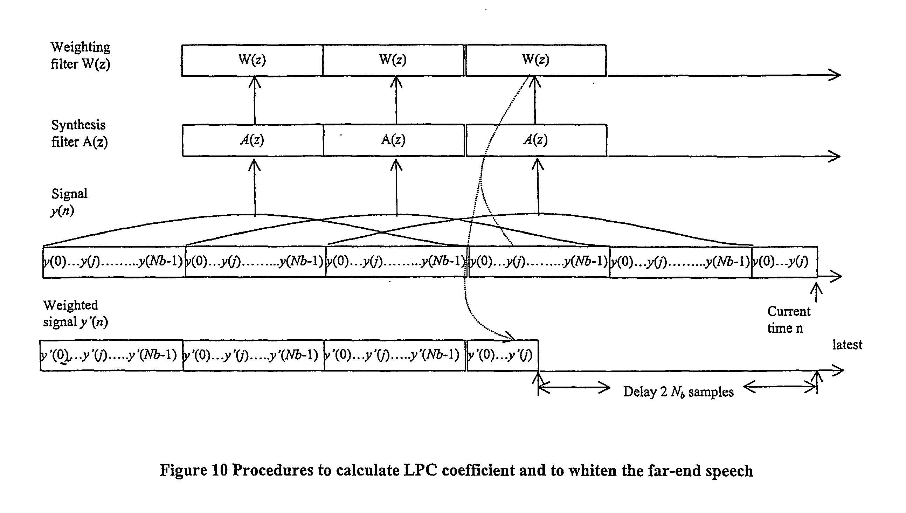

Due to non-stationary effects, the long tail length is divided into segments and each segment is applied with its own weighting filter. Figures 9 and 10 show the operation of weighting filters.

**LPC Vocoder Based Applications**

In this application, it is assumed that there is a decoder such as of the types known as ITU-T G.723.1 or G. 729, these being LPC-type vocoders. This provides reconstructed LPC coefficients that are ready to use, and so there is no need to calculate them from the linear PCM signal. In this case, the subframe size $N_b$ is as same as the vocoder. One example is shown in Figure 9. In the Figure, only the current frame decoding procedure is shown. The $N_w$ historical signal samples of $y(n)$ are used to calculate $y'(n)$ at the very beginning of the frame. $N_w$ is the order of weighting FIR filter. For next frame decoding, the same procedure is used.

In the Figure, the first sample falling in each block is denoted by $y(0)$. In each block, the different $y(0)$ may have different values. From the bit stream, the four subframe's LPC filter can be calculated. The weighting filter $W(z)$ is calculated accordingly, based on the applicable $A(z)$. Passing far-end signal $y(n)$ through $W(z)$ yields the weighted signals $y'(n)$.

**Non-LPC Vocoder Application**

In a non-LPC type application, the LPC coefficients are calculated using the Levinson-Durbin method. For each of the $N_b$ samples it is required to update the weighting filter coefficients. There are several ways to update the weighting filter coefficients. One is using one block look ahead and one current block as well as one previous block. One example to update $W(z)$ is shown in Figure 10.

In Figure 10, three $N_b$ samples are used to calculate LPC coefficients. A windowing technique can be used for three $N_b$ samples before computing the LPC coefficients. The delay due to the buffering effect is $2*N_b$ samples. For AEC applications, this extra delay does not greatly affect the audio signals.

Adaptive Transversal Filter

The equivalent structure of Figure 6 is shown in Figure 7. These represent the same topology. The coefficients updating is performed as follows.

$$h_k(n+1) = h_k(n) + 2\mu.e(n).y'(n-k)/P_y(n) \tag{16}$$

$$y'(n) = y(n) * w(n) = \sum_{k=0}^{N_w-1} w(k)y(n-k) \tag{17}$$

$$\hat{r}(n) = y'(n) * h_k(n) * w'(n) = y(n) * h_k(n) \tag{18}$$

$$P_y(n) = (1-\alpha)P_y(n-1) + \alpha.y'(n)^2 \tag{19}$$

$$u(n) = x(n) + r(n) - \hat{r}(n) \tag{20}$$

$$e(n) = r(n) - \hat{r}(n) \tag{21}$$

where $w'(n)$ is the impulse response of the inverse weighting filter $1/W(z)$. It is assumed that $w(n)*w'(n) = \delta(n)$. If truncated at $2p$ for impulse responses, $w(n)*w'(n)$ is almost identical to $\delta(n)$.

In Equation 16, the coefficients are updated with $\Delta h_k(n+1)$ upon the previous coefficients $h_k(n)$. This $\Delta h_k(n+1)$ is actually weighted by $I/w(z)$ which emphasises the high energy frequency components rather than whitening. By this, the procedure is considered to be best described as an adaptive weighting technique rather than whitening. Equation 16 is interpreted as indicated that the far-end signal is whitened and the correction of coefficients are weighted by its speech spectrum envelope, as further described in the following.

For the structure shown in Figure 8, the updating is as above except that the weighting (whitening) filter is divided into $N_d$ segments. Consequently, the notations are modified somewhat. The main idea of this structure is to weight the time-varying far-end signals segmentally in order to achieve better whitening effects.

In the Figure, in segment $i(i=0, ..., Nd - 1)$, the signals or equations are modified as follows:

$$H_i(z) = \sum_{k=0}^{N_b-1} h_{k+iN_b}(n)z^{-(k+iN_b)} \tag{22}$$

If define

$$W_i(z) = W_{i-1}(z)z^{-(i-1)N_b}, \quad i \geq 1 \tag{23}$$

and the impulse response of $W_i(z)$ is $w_i(n)$, the weighted far-end signals is given by

$$y_i'(n) = y(n - iN_b) * w_i(n) = \sum_{k=0}^{N_w-1} w_i(n)y(n - iN_b - k) \tag{24}$$

Coefficients updating is performed by

$$h_{k+iN_b}(n+1) = h_{k+iN_b}(n) + 2\mu e(n)y_i'(n-k)/P_y(n) \tag{25}$$

The normalisation power is updated by

$$P_y(n) = (1-\alpha)P_y(n-1) + \alpha.y_0'(n)^2 \tag{26}$$

The error signals is given by the same Equation 21.

Adaptive Transversal Filter Coefficients Updating

In LMS, the correction part of the transversal filter coefficients is the element of a gradient vector. Referring to Figure 1 or 6, the gradient vector is computed based on the cost-function or MSE, which is given by

$$|e(n)|^2 = [r(n) - y(n) * h_k(n)]^2 = \{r(n) - [y(n) * w(n)] * [h_k(n) * w'(n)]\}^2$$
$$= \{r(n) - [y(n) * w(n)] * h_k'(n)\}^2 \tag{27}$$

where $h_k'(n)$ is defined by

$$h_k'(n) = h_k(n) * w'(n) = \sum_{i=0}^{N_b} w'(i)h_{k-i}(n), \quad k = 0, \ldots, N-1 \tag{28}$$

If we define the vectors as

$$\mathbf{h}(n) = [h_0(n), h_1(n), \ldots, h_k(n), \ldots, h_{N-1}(n)]^T, \tag{29}$$

$$\mathbf{y}(n) = [y_0(n), y_1(n), \ldots, y_k(n), \ldots, y_{N-1}(n)]^T, \tag{30}$$

$$\mathbf{h}'(n) = [h_0'(n), h_1'(n), \ldots, h_k'(n), \ldots, h_{N-1}'(n)]^T, \text{ and} \tag{31}$$

$$\mathbf{y}'(n) = [y_0'(n), y_1'(n), \ldots, y_k'(n), \ldots, y_{N-1}'(n)]^T, \tag{32}$$

the vector representation of Equation 1 becomes

$$\mathbf{h}(n+1) = \mathbf{h}(n) + \mu \nabla_h / P_y(n) = \mathbf{h}(n) + 2\mu e(n)\mathbf{y}(n) / P_y(n) \qquad (33)$$

where $\nabla_h = 2e(n)\mathbf{y}(n)$, which is the gradient vector and calculated by using partial derivative of MSE of Equation 27.

The direction of $\nabla_h$ gives the direction of steepest ascent, the magnitude gives the value of the gradient at the point $\mathbf{h}(n)$. The LMS algorithm adjusts $\mathbf{h}(n)$ by a fraction of the gradient in the above equation.

On the other hand, in this invention, as described by Equation 16, the gradient vector is

$$\nabla_{h'} = 2e(n)\mathbf{y}'(n-k) \qquad (34)$$

The coefficients are updated by

$$\mathbf{h}(n+1) = \mathbf{h}(n) + \mu \nabla_{h'} / P_y(n) = \mathbf{h}(n) + 2\mu e(n)\mathbf{y}'(n) / P_y(n) \qquad (35)$$

This equation is the same as Equation 16.

The gradient vector $\nabla_{h'}$ is a version of $\nabla_h$ weighted by a speech spectral envelope. In Equations 16 and 28, the correction part of the transversal filter coefficients is weighted by $w'(n)$ or by inverse weighting filter $1/W(Z)$. The weighted coefficients are allowed to put more weight in formant parts and less weight in valleys of spectrum. This is a type of adaptive weighting.

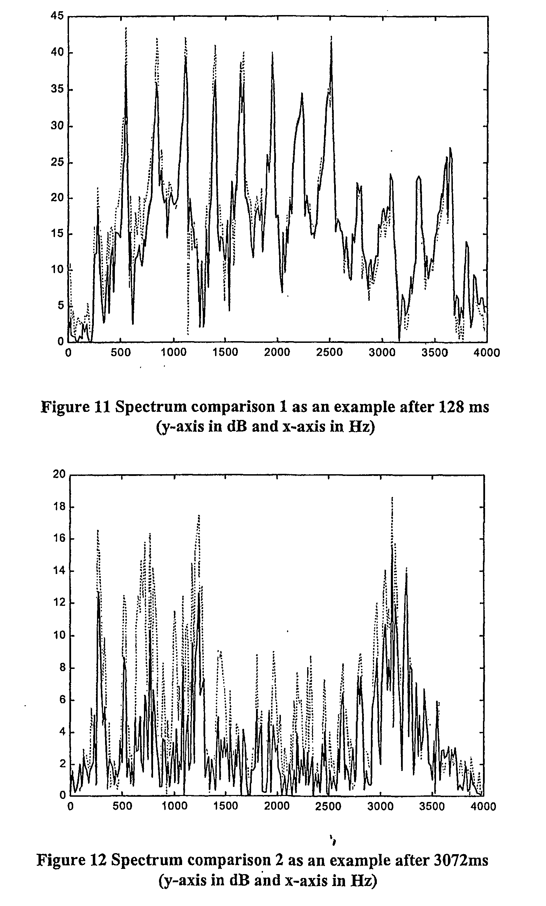

As an example of the performance comparison, the system shown in a spectrum comparison was made between use of the method of the invention and that of Figure 1. The results are shown in Figures 11 and 12 respectively.

In Figures 11 and 12, the curves are the spectra of $e(n)$. The dotted lines represent the spectra of $e(n)$ by using the method of Figure 1, and the solid lines represent the spectrum of $e(n)$ by using this invention. An improvement in the echo-cancellation performance by several dBs is achieved by the invention.

The invention is generally applicable in the field of telecommunications, audio conferencing and the Internet, and generally wherever echo cancellation is used. It may be applied to both line echo cancellation (LEC) and acoustic echo cancellation (AEC). It is particularly useful in linear prediction coder (LPC) type applications. The greatest advantages of the present invention are obtained in,implementation and performance of the echo canceller when it is combined with a speech codec. These advantages are obtained due to the fact that the performance of the echo canceller is improved (e.g., speed of convergence, noise floor level reached, etc.) when it uses some elements from the speech codec system. When these two are combined, the requirements for practical implementation (e.g. MIPS, memory) are reduced.

An example where this technology is particularly appropriate is in Voice-over-IP applications. In this case various speech codec are deployed together with an echo canceller to achieve full-duplex operation. Video and teleconferencing are two other areas where this technology can be applied.

The foregoing detailed description of implementations of the present invention has been presented by way of example only, and is not intended to be considered limiting to the invention as defined in the appended claims.

**Claims**

1. A communications apparatus including an echo canceller said communications apparatus having an incoming far-end signal ((y(n)) and a near-end signal (x(n)+r(n)) which may include an echo component (r(n)) derived from the far-end signal, the echo canceller (100) including an echo estimator (160-166) for generating an estimated echo signal (r'(n)), and a signal combiner (130) for subtracting the estimated echo signal from said near-end signal to generate a compensated near-end signal (u(n)) including an echo error signal component, wherein said echo estimator (160-166) includes a weighting filter (162) arranged to produce a whitened far-end signal (y'(n)) by weighted filtering of the incoming far-end signal, and a weighting filter coefficient processor (160) which determines weighting filter coefficients (w(n)) for the weighting filter according to linear predictive coding coefficients derived dynamically from the incoming far-end signal, the echo estimator (160-166) further including an adaptive transversal filter (164) having adaptive coefficients (h(n)) determined according to said whitened far-end signal and said error signal component, said adaptive transversal filter (164) being operative to generate said estimated echo signal by filtering said far-end signal using said adaptive coefficients.

2. A communications apparatus according to claim 1, including:

> a decode processor (110) which generates said far end signal y(n) on a first communication channel (112);
> an encode processor (150) receiving said compensated near-end signal from a second communications channel (132) and transmitting a compensated output signal to a far-end communication system.

3. A communications apparatus according to claim 2, wherein said linear predictive coding coefficients are decoded directly from said incoming far-end signal (y(n)) by said decode processor (110).

4. A communications apparatus according to claim 3, wherein said decode processor (110) is constructed according to one of ITU-T standards G.723.1 and G.729.

5. A communications apparatus according to claim 1 or 2, including a plurality of adaptive transversal filters (164) coupled in parallel with respectively time delayed inputs for receipt of said far-end signal y(n) and said whitened far-end signal.

6. A communications apparatus according to any of the preceding claims, wherein:

> said whitened far-end signal data y'(n) is generated according to:

$$y'(n) = y(n) * w(n);$$

> said estimated echo signal is generated according to

$$r'(n) = y(n) * h(n);$$

> and
> said adaptive coefficients h(n) are determined according to

$$h_k(n+1) = h_k(n) + K.e(n).y'(n-k)/P_y(n)$$

$$P_y(n) = (1-a).P_y(n-1) + a.y'(n)^2$$

> where n, k are integers, and K, a are constants.

7. A communications apparatus according to any of the preceding claims, wherein the incoming far-end signals comprise a series of digital data samples; said linear predictive coding coefficients are calculated from a block comprising a plurality of sequential samples of the incoming communications signals and said adaptive coefficients are determined for each sample in said block on the basis of said weighted far-end signal and said error signal.

8. A communications apparatus according to claim 7, including a plurality of adaptive transversal filters (164) each generating respective estimated echo signals that are, in use, subtracted from said weighted far-end signal, wherein the plurality of adaptive transversal filters each use different adaptive filter coefficients.

9. A method for echo cancellation in a communications system having incoming communications signals (y(n)) and outgoing communications signals (x(n)+r(n)), wherein the outgoing communications signals include an echo signal (r(n)) derived from the incoming communications signals, the method including:

> generating weighting filter coefficients w(n) based on linear predictive coding coefficients calculated dynamically from the incoming communications signals;
> filtering the incoming communications signals through a weighting filter (162) utilising- said weighting filter coefficients to produce a weighted incoming communications signals (y'(n));

generating estimated echo signals (r'(n)) by filtering the incoming communications signals (y(n)) through an adaptive transversal filter (164), the adaptive transversal filter using adaptive filter coefficients (h(n)); and subtracting said estimated echo signals (r'(n)) from said outgoing communications signals (x(n)+r(n)) to produce error signals (e(n));

wherein said adaptive filter coefficients (h(n)) are determined for each sample in said block on the basis of said weighted incoming communications signals (y'(n)),

**characterized in that** said filter coefficients (h(n)) are determined also on the basis of said error signals (e(n)).

10. A method according to claim 9, wherein the incoming communications signals (y(n)) comprise a series of digital data samples and said linear predictive coding coefficients are calculated a block comprising a plurality of sequential samples of the incoming communications signals (y(n)).

11. A method as claimed in claim 9 or 10, wherein a plurality of adaptive transversal filters (164) are provided, each generating respective estimated echo signals that are subtracted from said outgoing communications signals, the plurality of adaptive transversal filters each using different adaptive filter coefficients.

**Patentansprüche**

1. Kommunikationsvorrichtung, die eine Echo-Unterdrückungseinrichtung enthält, wobei die Kommunikationsvorrichtung ein eingehendes Far-End-Signal ((y(n)) und ein Near-End-Signal (x(n)+r(n)) hat, das eine Echo-Komponente (r(n)) enthalten kann, die von dem Far-End-Signal hergeleitet wird, die Echo-Unterdrückungseinrichtung (100) eine Echo-Schätzeinrichtung (160-166) zum Erzeugen eines geschätzten Echo-Signals (r'(n)) sowie eine Signal-Kombiniereinrichtung (130) enthält, die dass geschätzte Echo-Signal von dem Near-End-Signal subtrahiert, um ein kompensiertes Near-End-Signal (u(n)) zu erzeugen, das eine Echo-Fehlersignalkomponente enthält, die Echo-Schätzeinrichtung (160-166) ein Gewichtungsfilter (162), das so eingerichtet ist, dass es ein Whitening unterzogenes Far-End-Signal (y'(n)) durch gewichtetes Filtern des eingehenden Far-End-Signals erzeugt, und eine Gewichtungsfilterkoeffizienten-Verarbeitungseinrichtung (160) enthält, die Gewichtungsfilterkoeffizienten (w(n)) für das Gewichtungsfilter entsprechend LPC(Linear Predictive Coding)-Koeffizienten bestimmt, die dynamisch von dem eingehenden Far-End-Signal hergeleitet werden, die Echo-Schätzeinrichtung (160-166) des Weiteren ein adaptives Transversalfilter (164) enthält, das adaptive Koeffizienten (h(n)) hat, die entsprechend dem Whitening unterzogenen Far-End-Signal und der Fehlersignalkomponente bestimmt werden, und das adaptive Transversalfilter (164) in Funktion das geschätzte Echo-Signal erzeugt, indem es das Far-End-Signal unter Verwendung der adaptiven Koeffizienten filtert.

2. Kommunikationsvorrichtung nach Anspruch 1, die enthält:

eine Decodier-Verarbeitungseinrichtung (110), die das Far-End-Signal y(n) auf einem ersten Kommunikationskanal (112) erzeugt;

eine Codier-Verarbeitungseinrichtung (150), die das kompensierte Near-End-Signal von einem zweiten Kommunikationskanal (132) empfängt und ein kompensiertes Ausgangssignal zu einem Far-End-Kommunikationssystem sendet.

3. Kommunikationsvorrichtung nach Anspruch 2, wobei die LPC-Koeffizienten durch die Decodier-Verarbeitungseinrichtung (110) direkt aus dem eingehenden Far-End-Signal (y(n)) decodiert werden.

4. Kommunikationsvorrichtung nach Anspruch 3, wobei die Decodier-Verarbeitungseinrichtung (110) entsprechend einem der ITU-T-Standards G.723.1 oder G.729 aufgebaut ist.

5. Kommunikationsvorrichtung nach Anspruch 1 oder 2, die eine Vielzahl adaptiver Transversalfilter (164) enthält, die parallel mit jeweils zeitverzögerten Eingängen zum Empfang des Far-End-Signals y(n) und des Whitening unterzogenen Far-End-Signals gekoppelt sind.

6. Kommunikationsvorrichtung nach einem der vorangehenden Ansprüche, wobei:

die Daten des Whitening unterzogenen Far-End-Signals y'(n) entsprechend

$$y'(n) = y(n)*w(n);$$

erzeugt werden;
das geschätzte Echo-Signal entsprechend

$$r'(n) = y(n)*h(n);$$

erzeugt wird; und
die adaptiven Koeffizienten h(n) entsprechend

$$h_k(n+1) = h_k(n) + K.e(n).y'(n-k)/P_y(n)$$

$$P_y(n) = (1-a).P_y(n-1) + a.y'(n)^2$$

bestimmt werden, wobei n, k ganze Zahlen sind und K, a Konstanten sind.

7. Kommunikationsvorrichtung nach einem der vorangehenden Ansprüche, wobei die eingehenden Far-End-Signale eine Reihe digitaler Datenabtastwerte umfassen, die LPC-Koeffizienten aus einem Block berechnet werden, der eine Vielzahl sequenzieller Abtastwerte der eingehenden Kommunikationssignale umfasst, und die adaptiven Koeffizienten für jeden Abtastwert in dem Block auf Basis des gewichteten Far-End-Signals sowie des Fehlersignals bestimmt werden.

8. Kommunikationsvorrichtung nach Anspruch 7, die eine Vielzahl adaptiver Transversalfilter (164) enthält, die jeder jeweilige geschätzte Echo-Signale erzeugen, die in Funktion von dem gewichteten Far-End-Signal subtrahiert werden, wobei die Vielzahl adaptiver Transversalfilter jeweils verschiedene adaptive Filterkoeffizienten verwenden.

9. Verfahren zur Echounterdrückung in einem Kommunikationssystem mit eingehenden Kommunikationssignalen (y(n)) und ausgehenden Kommunikationssignalen (x(n)+r(n)), wobei die ausgehenden Kommunikationssignale ein Echo-Signal (r(n)) enthalten, das von den eingehenden Kommunikationssignalen hergeleitet wird, und das Verfahren einschließt:

Erzeugen von Gewichtungs-Filterkoeffizienten w(n) auf Basis von LPC-Koeffizienten, die dynamisch aus den eingehenden Kommunikationssignalen berechnet werden;
Filtern der eingehenden Kommunikationssignale über ein Gewichtungsfilter (162) unter Nutzung der Gewichtungs-Filterkoeffizienten, um gewichtete eingehende Kommunikationssignale (y'(n)) zu erzeugen;
Erzeugen geschätzter Echo-Signale (r'(n)) durch Filtern der eingehenden Kommunikationssignale (y(n)) über ein adaptives Transversalfilter (164), wobei das adaptive Transversalfilter adaptive Filterkoeffizienten (h(n)) verwendet; und
Subtrahieren der geschätzten Echo-Signale (r'(n)) von den ausgehenden Kommunikationssignalen (x(n)+r(n)), um Fehlersignale (e(n)) zu erzeugen;
wobei die adaptiven Filterkoeffizienten (h(n)) für jeden Abtastwert in dem Block auf Basis der gewichteten eingehenden Kommunikationssignale (y'(n)) bestimmt werden,
**dadurch gekennzeichnet, dass** die Filterkoeffizienten (h(n)) ebenfalls auf Basis der Fehlersignale (e(n)) bestimmt werden.

10. Verfahren nach Anspruch 9, wobei die eingehenden Kommunikationssignale (y(n)) eine Reihe digitaler Datenabtastwerte umfassen und die LPC-Koeffizienten aus einem Block berechnet werden, der eine Vielzahl sequenzieller Abtastwerte der eingehenden Kommunikationssignale (y(n)) umfasst.

11. Verfahren nach Anspruch 9 oder 10, wobei eine Vielzahl adaptiver Transversalfilter (164) vorhanden sind, die jeder jeweilige geschätzte Echo-Signale erzeugt, die von den ausgehenden Kommunikationssignalen subtrahiert werden, und die Vielzahl adaptiver Transversalfilter jeweils verschiedene adaptive Filterkoeffizienten verwenden.

**Revendications**

1. Appareil de communication comprenant un suppresseur d'écho, ledit appareil de communication ayant un signal entrant d'extrémité distante ((y(n)) et un signal d'extrémité locale (x(n)+r(n))pouvant comprendre un composant d'écho (r(n)) dérivé du signal d'extrémité distante, le suppresseur d'écho (100) comprenant un estimateur d'écho (160-166) pour générer un signal d'écho estimé (r'(n)), et un multiplexeur de signal (130) pour soustraire le signal d'écho estimé du signal d'extrémité locale afin de générer un signal d'extrémité locale compensé (u(n)) comprenant un composant de signal d'erreur d'écho, dans lequel ledit estimateur d'écho (160-166) comprend un filtre de pondération (162) agencé pour produire un signal d'extrémité distante blanchi (y'(n)) par le filtrage pondéré du signal d'extrémité distante entrant, et un processeur de coefficient de filtrage de pondération (160) qui détermine les coefficients de filtrage de pondération (w(n)) pour le filtre de pondération selon les coefficients de codage prédictif linéaire dérivés dynamiquement du signal d'extrémité distante entrant, l'estimateur d'écho (160-166) comprenant en outre un filtre transversal adaptatif (164) ayant des coefficients adaptatifs (h(n)) déterminés selon ledit signal d'extrémité distante blanchi et ledit composant de signal d'erreur, ledit filtre transversal adaptatif (164) étant opérationnel pour générer ledit signal d'écho estimé par le filtrage dudit signal d'extrémité distante en utilisant lesdits coefficients adaptatifs.

2. Appareil de communication selon la revendication 1, comprenant :

   un processeur de décodage (110) qui génère ledit signal d'extrémité distante y(n) sur un premier canal de communication (112) ;
   un processeur de codage (150) recevant ledit signal d'extrémité local compensé depuis un second canal de communication (132) et transmettant un signal de sortie compensé à un système de communication d'extrémité distante.

3. Appareil de communication selon la revendication 2, dans lequel lesdits coefficients de codage prédictif linéaire sont décodés directement à partir dudit signal d'extrémité distante entrant (y(n)) par ledit processeur de décodage (110).

4. Appareil de communication selon la revendication 3, dans lequel ledit processeur de décodage (110) est construit selon l'une des normes ITU-T G.723.1 et G.729.

5. Appareil de communication selon la revendication 1 ou 2, comprenant une pluralité de filtres transversaux adaptatifs (164) couplés en parallèle avec des entrées retardées dans le temps respectivement pour réception dudit signal d'extrémité distante y(n) et dudit signal d'extrémité distante blanchi.

6. Appareil de communication selon l'une quelconque des revendications précédentes, dans lequel :

   lesdites données du signal d'extrémité distante blanchi y'(n) sont générées selon :

$$y'(n) = y(n) * w(n) \; ;$$

   ledit signal d'écho estimé est généré selon

$$r'(n) = y(n) * h(n) \; ;$$

   et
   lesdits coefficients adaptatifs h(n) sont déterminés selon

$$h_k(n+1) = h_k(n) + K.e(n).y'(n-k)/P_y(n)$$

$$P_y(n) = (1-a).P_y(n-1) + a.y'(n)^2$$

où n, k sont des entiers, et K, a sont des constantes.

**7.** Appareil de communication selon l'une quelconque des revendications précédentes, dans lequel les signaux d'extrémité distante entrants comprennent une série d'échantillons de données numériques ; lesdits coefficients de codage prédictif linéaire sont calculés à partir d'un bloc comprenant une pluralité d'échantillons séquentiels de signaux de communication entrants et lesdits coefficients adaptatifs sont déterminés pour chaque échantillon dans ledit bloc sur la base dudit signal d'extrémité distante pondéré et dudit signal d'erreur.

**8.** Appareil de communication selon la revendication 7, comprenant une pluralité de filtres transversaux adaptatifs (164) générant chacun des signaux d'écho estimés respectifs qui sont, lors de l'utilisation, soustraits dudit signal d'extrémité distante pondéré, dans lequel la pluralité de filtres transversaux adaptatifs utilisent chacun différents coefficients de filtres adaptatifs.

**9.** Procédé pour suppression d'écho dans un système de communication ayant des signaux de communication entrants (y(n)) et des signaux de communication sortants (x(n) + r(n)), dans lequel les signaux de communication sortants comprennent un signal d'écho (r(n)) dérivé des signaux de communication entrants, le procédé comprenant :

la génération de coefficients de filtrage de pondération w(n) basés sur les coefficients de codage prédictif linéaire calculés dynamiquement à partir des signaux de communication entrants ;
le filtrage des signaux de communication entrants à travers un filtre de pondération (162) utilisant lesdits coefficients de filtrage de pondération pour produire des signaux de communication entrants pondérés (y'(n)) ;
la génération de signaux d'écho estimés (r'(n)) par filtrage des signaux de communication entrants (y(n)) à travers un filtre transversal adaptatif (164), ledit filtre utilisant des coefficients de filtre adaptatif (h(n)) ; et
la soustraction desdits signaux d'écho estimés (r'(n)) desdits signaux de communication sortants (x(n)+ r(n)) pour produire des signaux d'erreur (e(n)) ;
dans lequel lesdits coefficients de filtre adaptatif (h(n)) sont déterminés pour chaque échantillon dans ledit bloc sur la base desdits signaux de communication entrants pondérés (y'(n)),
**caractérisé en ce que** lesdits coefficients de filtrage (h(n)) sont déterminés également sur la base desdits signaux d'erreur (e(n)).

**10.** Procédé selon la revendication 9, dans lequel les signaux de communication entrants (y(n)) comprennent une série d'échantillons de données numériques et lesdits coefficients de codage prédictif linéaire sont calculés à partir d'un bloc comprenant une pluralité d'échantillons séquentiels de signaux de communication entrants (y(n)).

**11.** Procédé selon la revendication 9 ou 10, dans lequel une pluralité de filtres transversaux adaptatifs (164) sont fournis, chacun générant des signaux d'écho estimés respectifs qui sont soustraits desdits signaux de communication sortants, la pluralité de filtres transversaux adaptatifs utilisant chacun différents coefficients de filtre adaptatif.

Near-end signal
$x(n)+r(n)$

$50$

$u(n) = x(n) + r(n) - \hat{r}(n)$

NLP

Encoder

Bit stream to
far-end

$-\hat{r}(n)$

$20$

echo

$30$

H(z)   $40$

$10$

Decoder

Far-end signal $y(n)$

Bit stream
from far-end

**Figure 1**

Near-end signal
$x(n)+r(n)$

$u(n) = x(n) + r(n) - \hat{r}(n)$

$-\hat{r}(n)$

$W(z)$   $e^{\cdot}(n)$

$H(z)$   $H(z)$   $W(z)$   Update
$W(z)$

$y^{\cdot}(n)$

Far-end signal $y(n)$

**Figure 2** ·

**Figure 3 Illustrations of speech waveform**
**(y-axis:linear amplitude; x-axis: samples)**

**Figure 4 Illustrations of speech spectrum and its envelope**
**(y-axis:Magnitude in dB; x-axis:frequency in Hz)**

**Figure 5** Weighting factors $\gamma_1 = 0.7, \gamma_2 = 0.9$ and $p=10$
(y-axis Magnitude in dB, x-axis Frequency in Hz)

Figure 6

Near-end signal
x(n)+r(n)

_130_

$u(n) = x(n) + r(n) - \hat{r}(n)$

_140_

_150_

NLP

Encoder

Bit stream to.
far-end

e(n)

$-\hat{r}(n)$

echo

s(n)

_16_

_160_

H(z) ← W(z) ← Update W(z)

Bit stream
from far-end

_164_

Far-end signal y(n)

Decoder

_110_

**Figure7**

20

Figure 8

EP 1 393 461 B1

Next frame

Decode the bit stream and composite synthesis filter $A(z)$ for each subframe

Synthesis filter A(z)

| $A(z)$ | $A(z)$ | $A(z)$ | $A(z)$ |

Weighting filter $w(n)$

| $w(z)$ | $w(z)$ | $w(z)$ | $w(z)$ |

Decoded speech $y(n)$

$y(-N_w+1)...y(-1)$ | $y(0)...y(j).........y(Nb-1)$ | $y(0)...y(j).........y(Nb-1)$ | $y(0)...y(j).........y(Nb-1)$ | $y(0)...y(j).........y(Nb-1)$

Weighted signal $y'(n)$

$y'(0)...y'(j).....y'(Nb-1)$ | $y'(0)...y'(j).....y'(Nb-1)$ | $y'(0)...y'(j).....y'(Nb-1)$ | $y'(0)...y'(j).....y'(Nb-1)$

latest

**Figure 9 Procedures to use G.723.1 LPC coefficient to calculate the whitened far-end speech**

Figure 10 Procedures to calculate LPC coefficient and to whiten the far-end speech

**Figure 11 Spectrum comparison 1 as an example after 128 ms
(y-axis in dB and x-axis in Hz)**

**Figure 12 Spectrum comparison 2 as an example after 3072ms
(y-axis in dB and x-axis in Hz)**